# EUROPÄISCHE PATENTANMELDUNG

(11) **EP 0 686 523 A2**
(43) Veröffentlichungstag der Anmeldung: **13.12.1995**
(21) Anmeldenummer: 95107191.9
(22) Anmeldetag: 11.05.1995
(51) Int. Cl.: B60Q 7/00

(54) **Warndreieck**

(30) Priorität: 11.05.1994 DE 9407832 U
(71) Anmelder: Rothbauer, Jörg, D-21423 Winsen, Luhe (DE)
(72) Erfinder: Rothbauer, Jörg, D-21423 Winsen, Luhe (DE)
(74) Vertreter: Schmidt-Bogatzky, Jürgen, Dr. Ing.

(57) **Zusammenfassung**

Die Erfindung betrifft ein Warndreieck mit lichtreflektierenden miteinander zu einem Dreieck verbindbaren Stäben 2, hinter denen eine den Hohlraum zwischen den Stäben 2 abdeckende Folie 3 befestigbar ist. Auf der Folie 3 ist ein Pannenhinweisschild 6 lösbar angeordnet. Hierzu ist auf der Rückseite 7 des Pannenhinweisschildes 6 eine Klettfläche 8 ausgebildet, die mit einer auf der Folie 3 ausgebildeten weiteren Klettfläche 9 in Eingriff bringbar ist.

## Beschreibung

Die Erfindung betrifft ein Warndreieck.

Warndreiecke sind übliche Ausrüstungsgegenstände für Kraftfahrzeuge, um im Falle einer Störung des Fahrbetriebs durch z. B. Fahrzeugschaden oder Unfall den Standort des Fahrzeugs absichern zu können. Derartige Warndreiecke sind im Regelfall zusammenklappbar ausgebildet. Die Umrandung besteht aus roten reflektierenden Stäben. Die die Seitenschenkel des Warndreiecks bildenden Stäbe sind dabei an dem die Basis bildenden Stab gelenkig gelagert und an ihren anderen Endabschnitten lösbar miteinander verbindbar. In dieser Stellung der Stäbe kann dann hinter diese eine weiße Folie aufgespannt werden. Diese bekannten Warndreiecke haben den Nachteil, daß sie für Dritte zwar eine Betriebsstörung des Fahrzeugs signalisieren, es für diese aber nicht ohne weiteres erkennbar ist, welcher Art die Störung ist. Hierdurch ist es nicht möglich, Dritte auf erforderliche spezielle Hilfeleistungen anzusprechen.

Die Aufgabe der Erfindung besteht darin, das bekannte Warndreieck so weiter zu entwickeln, daß auf einfache Weise Dritten Informationen über den konkreten Hilfebedarf visuell vermittelt werden können.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben.

Die Erfindung wird nachstehend am Beispiel des in der Zeichnung dargestellten Warndreiecks näher erläutert. Es zeigt:
- Fig. 1: das Warndreieck in einer Ansicht von vorn,
- Fig. 2: ein Detail des Warndreiecks in einer perspektivischen Explosionsdarstellung.

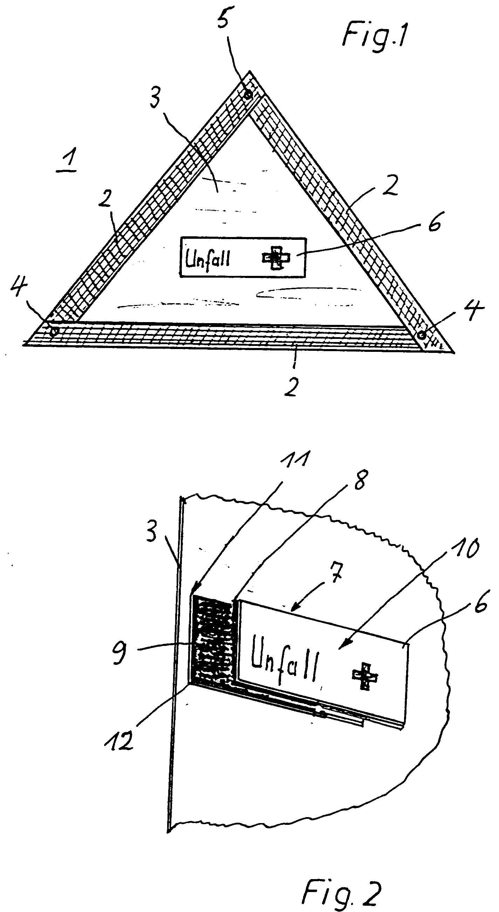

Das Warndreieck 1 besteht aus drei Stäben 2. An dem die Basis bildenden Stab 2 ist endabschnittseitig jeweils mittels eines Gelenkes 4 ein weiterer Stab 2 angelenkt. Diese weiteren Stäbe 2 sind an ihren anderen Endabschnitten lösbar miteinander verbindbar. Hierzu weist z. B. der eine Stab 2 einen Verbindungsstift 5 auf, der durch eine entsprechende Durchbrechung im anderen Stab 2 durchgesteckt werden kann. In dieser Stellung ist wie in Fig. 1 dargestellt die Folie 3 hinter den Stäben 2 hochgezogen und am Verbindungsstift 5 befestigt. Die Stäbe 2 können wie üblich rotfarbig lichtreflektierend ausgebildet sein. Die Folie 3 ist weiß. Auf der Folie 3 ist ein Pannenhinweisschild 6 befestigt.

Wie in Fig. 2 dargestellt, kann die Befestigung des Pannenhinweisschildes 6 auf der Folie 3 mittels einer Klettverbindung erfolgen. Hierzu ist an der Rückseite 7 des Pannenhinweisschildes 6 eine Klettfläche 8 ausgebildet. Auf der Folie 3 befindet sich eine weitere Klettfläche 9, deren Größe der Klettfläche 8 des Pannenhinweisschildes 6 entspricht.

Zum Warndreieck 1 kann jeweils ein besonderer Satz von Pannenhinweisschildern 6 vorgesehen sein, auf deren Sichtfläche 10 jeweils eine besondere Angabe wie Unfall, Wasser, Treibstoff, Motor u. dgl. vorgesehen ist. Durch ein weiteres besonderes Symbol wie z. B. einen roten Punkt oder ein Kreuz auf der Sichtfläche 10 kann ein besonderer Hilfebedarf signalisiert werden. Eine andere Farbe wie z. B. grün kann dem fließenden Verkehr signalisieren, daß es sich um ein kurzfristig abgestelltes Fahrzeug handelt oder daß die Betriebsstörung durch Selbsthilfe beseitigt wird. Die Sichtflächen 10 der Pannenhinweisschilder 6 können mit einer Leuchtfarbe beschichtet sein. Es ist aber auch möglich, die Pannenhinweisschilder 6 aus einem leuchtfarbigen Kunststoff auszubilden. In einer weiteren Ausgestaltung können die Sichtflächen 10 der Pannenhinweisschilder 6 auch lichtreflektierend ausgebildet sein.

Das die Klettfläche 9 aufweisende Trägermaterial 12 ist mittels einer Klebschicht 11 auf der Folie 3 befestigt. Die Klebschicht 11 kann auf der Rückseite des Trägermaterials 12 ausgebildet und vor der Befestigung auf der Folie 3 mit einer abziehbaren Schutzfolie abgedeckt sein. Mittels eines so ausgebildeten Trägermaterials 12 ist auch eine nachträgliche Ausrüstung von Warndreiecken mit dem Trägermaterial 12 zur Halterung von Pannenhinweisschildern 6 möglich.

## Patentansprüche

1. Warndreieck mit lichtreflektierenden miteinander zu einem Dreieck verbindbaren Stäben (2), hinter denen eine den Hohlraum zwischen den Stäben (2) abdeckende Folie (3) befestigbar ist, dadurch gekennzeichnet, daß auf der Folie (3) ein Pannenhinweisschild (6) lösbar angeordnet ist.

2. Warndreieck nach Anspruch 1, dadurch gekennzeichnet, daß auf der Rückseite (7) des Pannenhinweisschildes (6) eine Klettfläche (8) ausgebildet ist, die mit einer auf der Folie (3) ausgebildeten weiteren Klettfläche (9) in Eingriff bringbar ist.

3. Warndreieck nach Anspruch 1, dadurch gekennzeichnet, daß die Sichtfläche (10) des Pannenhinweisschildes (6) mit einer Leuchtfarbe beschichtet ist.

4. Warndreieck nach Anspruch 1, dadurch gekennzeichnet, daß das Pannenhinweisschild (6) aus einem leuchtfarbigen Kunststoff besteht.

5. Warndreieck nach Anspruch 1, dadurch gekennzeichnet, daß die Sichtfläche (10) des Pannenhinweisschildes (6) lichtreflektierend ausgebildet ist.

6. Warndreieck nach Anspruch 2, dadurch gekennzeichnet, daß auf der Rückseite des die Klettfläche (9) aufweisenden Trägermaterials (12) eine Klebschicht (11) ausgebildet ist.
